# EUROPÄISCHE PATENTSCHRIFT

(11) **EP 3 153 351 B1**
(45) Veröffentlichungstag und Bekanntmachung des Hinweises auf die Patenterteilung: **16.06.2021**
(21) Anmeldenummer: 16190621.9
(22) Anmeldetag: 26.09.2016
(51) Int. Cl.: B60Q 1/14, G01M 11/06, G06K 9/00

(54) **VERFAHREN ZUR STEUERUNG EINER ADAPTIVEN LICHTFUNKTION SOWIE KRAFTFAHRZEUGSCHEINWERFER**
METHOD FOR CONTROLLING AN ADAPTIVE LIGHT FUNCTION AND MOTOR VEHICLE HEADLIGHT
PROCEDE DE COMMANDE D'UNE FONCTION D'ECLAIRAGE ADAPTATIF ET PHARE DE VEHICULE AUTOMOBILE

(30) Priorität: 07.10.2015 AT 508582015
(43) Veröffentlichungstag der Anmeldung: 12.04.2017
(73) Patentinhaber: ZKW Group GmbH, 3250 Wieselburg (AT)
(72) Erfinder: Miedler, Stefan, A-3105 Unterradlberg (AT); Ebner, Martin, 3300 Amstetten (AT)
(74) Vertreter: Patentanwaltskanzlei Matschnig & Forsthuber OG

(56) Entgegenhaltungen:
- EP-A1- 2 128 589
- DE-A1- 19 916 175
- DE-A1-102007 040 042
- DE-A1-102010 006 190
- DE-A1-102011 050 535
- DE-A1-102012 110 377
- DE-T5-112013 004 381
- US-A1- 2013 049 587

## Beschreibung

Die Erfindung betrifft ein Verfahren zur Steuerung einer adaptiven Lichtfunktion eines mit einem Kraftfahrzeug zusammenwirkenden Kraftfahrzeugscheinwerfers, bei welchem ausgehend von einer Gesamtlichtverteilung der adaptiven Lichtfunktion ein Segment der Gesamtlichtverteilung, in welchem sich ein vor Blendung zu schützendes Objekt befindet, durch Dimmen zumindest eines, dem genannten Segment entsprechenden Leuchtelements einer die adaptive Lichtfunktion bereitstellenden und eine Mehrzahl von Leuchtelementen aufweisenden Leuchteinheit des Kraftfahrzeugscheinwerfers abgedunkelt wird, wobei das Dimmen in Abstimmung mit Analysedaten einer optischen Erfassung von Umrisskanten des Objekts erfolgt, sowie einen entsprechenden Kraftfahrzeugscheinwerfer.

In letzter Zeit finden immer mehr Kraftfahrzeugscheinwerfer mit adaptiver Fernlichtfunktion den Weg auf den Markt. Im Gegensatz zur herkömmlichen Fernlichtfunktion, bei der ein überaus starker Lichtstrom mit einer Lichtverteilung vor das Fahrzeug abgestrahlt wird, die prinzipiell die Gefahr der Blendung von entgegenkommendem oder voranfahrendem Verkehr bzw. von Fußgängern und Radfahrern in sich birgt, und weiters im Gegensatz zu einer Abblendlichtfunktion, bei der das Licht eines Kraftfahrzeugscheinwerfers zur Vermeidung der Blendung des Verkehrs relativ flach und daher nur knapp vor das Fahrzeug abgestrahlt wird, zeichnen sich adaptive Fernlichtfunktionen dadurch aus, dass ausgehend von einer Fernlichtfunktion und einer entsprechenden Lichtverteilung einzelne Pixel bzw. Segmente des Lichtbilds abgedunkelt werden können, um die Blendung von Verkehrsteilnehmern in diesen Segmenten der Lichtverteilung zu verhindern. Voraussetzung hierfür sind Kraftfahrzeugscheinwerfer, deren Gesamtlichtverteilung im Fernlichtbetrieb von einer Vielzahl von einzelnen Leuchtelementen gebildet wird, die jeweils einem bestimmten Segment der Fernlichtverteilung entsprechen bzw. ein solches Segment beleuchten und die einzeln angesteuert werden können, um sie zu dimmen bzw. gänzlich abzuschalten.

Zur Realisierung einer derartigen Fernlichtfunktion sind weiters Kamerasysteme und entsprechende Auswertesysteme für die Daten erforderlich, die mit der optischen Erfassung durch die Kamera gewonnen werden, wobei die Kamera bzw. die Mehrzahl von Kameras den Bereich vor dem Fahrzeug aufnimmt und mit im Stand der Technik bekannter Software Umrisskanten von vor eventueller Blendung zu schützenden Objekten erfasst und einem Rechner zugeführt werden, so dass die entsprechenden Segmente, d.h. die entsprechenden Leuchtelemente, des Kraftfahrzeugscheinwerfers abgedunkelt werden können.

Da die Blendung von Gegenverkehr oder voranfahrendem Verkehr ein relativ großes Problem hinsichtlich der Verkehrssicherheit darstellt, werden relativ große Sicherheitsabstände zu den von Blendung auszunehmenden Objekten gefordert, wobei die Einhaltung der geforderten Sicherheitsabstände aufgrund der Latenzzeit, die die Kamerasysteme bzw. die Systeme, bestehend aus Kamera und Auswertelogik aufweisen, oftmals zu überaus großflächig und insbesondere besonders breit abgedunkelten Bereichen in der Gesamtfernlichtverteilung führt, was insbesondere bei der Verwendung von relativ kostengünstigen und daher langsamen Kamerasystemen Ausmaße annehmen kann, die für den Benutzer von Fahrzeugen mit solchen adaptiven Fernlichtfunktionen unbefriedigend sind. Um dem zu begegnen, wurde beispielsweise in der EP 2 281 719 A1 vorgeschlagen, den Bereich, der für ein entgegenkommendes bzw. voranfahrendes Fahrzeug bzw. Objekt abgedunkelt wird, in seiner Breite danach zu wählen, an welcher Position sich ein Objekt befindet bzw. mit welcher Geschwindigkeit es sich im Lichtbild der Fernlichtfunktion in horizontaler Richtung bewegt. Der abgedunkelte Bereich wird umso breiter gewählt, je schneller sich ein solches Objekt seitwärts bewegt, um die Zeitverzögerung, die von der Erfassung des Objekts und dessen Bewegung bis zur Ansteuerung des Kraftfahrzeugscheinwerfers vergeht, ausreichend zu berücksichtigen. Eine solche Regelung lässt jedoch nicht immer eine zufriedenstellende Steuerung und vor allem keine Vorhersage bzw. Prädiktion des Verhaltens eines von Blendung auszunehmenden Objekts zu, so dass auch mit solchen Systemen weiterhin nur unzufriedenstellende Beleuchtungszustände erreicht werden.

Die EP 2128 589 A1 zeigt ein Verfahren zur Kalibrierung einer durch einen Frontscheinwerfer eines Fahrzeugs erzeugten Hell-Dunkel-Grenze, bei welcher ein Bild mit einer Abbildung eines Bereichs vor dem Fahrzeug erfasst wird. Bei der Verarbeitung des erfassten Bildes wird eine Position einer durch einen Frontscheinwerfer des Fahrzeugs erzeugten vertikalen Hell-Dunkel-Grenze als Ist-Position ermittelt und mit einer voreingestellten Soll-Position verglichen. Bei einer Abweichung der Ist-Position von der Soll-Position wird mindestens ein Korrekturwert gebildet.

In der DE 11 2013 004381 T5 wird der Leuchtbereich eines Fahrzeugscheinwerfers in Abhängigkeit einer Detektion eines vor dem Fahrzeug befindlichen vorderen Fahrzeuges verändert, sodass die Position des vorderen Fahrzeugs aus dem Leuchtbereich des Fahrzeugscheinwerfers fällt.

Die DE 10 2012 110377 A1 zeigt ein Verfahren zur adaptiven Hell-Dunkel-Grenze Erkennung zur Steuerung der Einstellung eines Scheinwerfers eines Fahrzeugs mit einer Vorrichtung zur Bilderzeugung und mit einer Steuereinheit zur Bildauswertung des von der Vorrichtung zur Bildermittlung erzeugten Bildes und mit einer Umfeldsensorik zur Ermittlung von Zustandsdaten des Umfelds des Fahrzeugs.

Es ist daher eine Aufgabe der vorliegenden Erfindung, ein Verfahren der eingangs genannten Art dahingehend zu verbessern, dass trotz der Verwendung von relativ günstigen und daher langsamen Kamerasystemen eine Optimierung von adaptiven Fernlichtfunktionen gelingt, wobei insbesondere eine Prädiktion bzw. Vorhersage des Verhaltens von vor Blendung zu schützenden Verkehrsteilnehmern unternommen werden soll. Zur Lösung dieser Aufgabe ist ein Verfahren zur Steuerung einer adaptiven Lichtfunktion der eingangs genannten Art erfindungsgemäß dahingehend weitergebildet, dass das Dimmen nach Maßgabe zumindest eines Steuerdatensatzes eines selbstkorrigierenden Algorithmus erfolgt, wobei der Algorithmus zumindest ein erstes Korrekturglied umfasst, welches mit den Analysedaten der optischen Erfassung rückgekoppelt ist und eine Veränderung des ersten Korrekturglieds vorgenommen wird, wenn ein Beleuchtungsfehler festgestellt wird. Der Algorithmus zur Steuerung der adaptiven Lichtfunktion, in der Regel einer adaptiven Fernlichtfunktion, greift somit auf einen Steuerdatensatz zurück, der für bestimmte Situationen ähnlich wie im Stand der Technik ein bestimmtes Verhalten des Kraftfahrzeugscheinwerfers vorsieht. Der Algorithmus gemäß dem erfindungsgemäßen Verfahren ist jedoch insofern selbstkorrigierend, als der Algorithmus ein Korrekturglied umfasst, in welches Analysedaten der optischen Erfassung durch das Kamerasystem einwirken und eine Veränderung des Korrekturglieds dann vorgenommen wird, wenn ein Beleuchtungsfehler festgestellt wird. Dies bedeutet, dass das erfindungsgemäße Verfahren auf einen Algorithmus mit einem Steuerdatensatz zurückgreift, der für den Fall, dass das Korrekturglied keine Veränderung erfährt, d.h für. den Fall, in dem sich das Korrekturglied neutral verhält, das Verhalten des Scheinwerfers bestimmt. Wenn nun aufgrund der optischen Erfassung ein Beleuchtungsfehler festgestellt wird, erfolgt eine Änderung des ersten Korrekturglieds, so dass das primär durch den Steuerdatensatz bedingte Verhalten des Kraftfahrzeugscheinwerfers abgeändert wird, da der Algorithmus insgesamt das Ergebnis von Steuerdatensatz und erstem Korrekturglied als Steuersignale an den Kraftfahrzeugscheinwerfer liefert. Als Beleuchtungsfehler werden in Zusammenhang mit der vorliegenden Erfindung unzufriedenstellende Beleuchtungszustände der adaptiven Lichtfunktion definiert, wobei hierauf im Folgenden noch eingegangen wird.

Insbesondere ist es gemäß einer bevorzugten Ausführungsform der vorliegenden Erfindung vorgesehen, dass als Beleuchtungsfehler ein Dimmen eines Leuchtelements eingestuft wird, welches einem Segment der Gesamtlichtverteilung entspricht, in welchem sich kein vor Blendung zu schützendes Objekt befindet. Ein solcher Beleuchtungsfehler ist somit ein zu breit abgedunkelter Bereich der adaptiven Lichtfunktion, was bedeutet, dass ein weiteres Leuchtelement oder eine Reihe von Leuchtelementen des Kraftfahrzeugscheinwerfers, die einem Segment der Lichtverteilung entsprechen, aufgeblendet hätte bleiben können, ohne dass eine Blendung des vor Blendung zu schützenden Objekts erfolgt wäre. In diesem Fall ist der dunkle Bereich der adaptiven Lichtfunktion unnötig breit. Wenn ein solcher Beleuchtungsfehler festgestellt wird, erfolgt eine Veränderung des ersten Korrekturglieds, so dass der Algorithmus unter Heranziehung des Steuerdatensatzes und des ersten Korrekturglieds veränderte Steuersignale liefert und eine Optimierung des Lichtbilds erfolgt.

Alternativ oder zusätzlich kann gemäß einer bevorzugten Ausführungsform der vorliegenden Erfindung als Beleuchtungsfehler ein zumindest teilweises Beleuchten eines vor Blendung zu schützenden Objekts eingestuft werden. In diesem Fall hat der Algorithmus unter Heranziehung des Steuerdatensatzes zu einer Blendung eines Objekts geführt, was optisch erfasst wird und zu einer Veränderung des ersten Korrekturglieds führt. Das erste Korrekturglied und weitere Korrekturglieder, die später ausführlich erläutert werden, dienen folglich dazu, eine Veränderung von Steuersignalen, die durch den Algorithmus ausgehend von dem grundlegenden Steuerverhalten, das im Steuerdatensatz festgelegt ist, zu veranlassen, wenn dies aufgrund der Fahrsituation notwendig erachtet wird.

Grundsätzlich ist es im Zusammenhang mit der vorliegenden Erfindung denkbar, Leuchtelemente in unterschiedlichem Ausmaß zu dimmen, um eine Blendung beispielsweise des Gegenverkehrs zu vermeiden. Um vor Blendung zu schützende Verkehrsteilnehmer zu schützen, kann es in diesem Zusammenhang auch vorgesehen sein, dass das Dimmen als Abschalten des zumindest einen dem genannten Segment entsprechenden Leuchtelements erfolgt.

Grundsätzlich ist es denkbar, bei jedem Auftreten eines wie oben definierten Beleuchtungsfehlers eine Veränderung des ersten Korrekturglieds vorzunehmen. Gemäß der vorliegenden Erfindung ist das erfindungsgemäße Verfahren jedoch dahingehend weitergebildet, dass eine Veränderung des ersten Korrekturglieds dann vorgenommen wird, wenn aufgrund der optischen Erfassung von Umrisskanten von Objekten in einem bestimmten Erfassungszeitraum ein Beleuchtungsfehler bezüglich zumindest 5% bis 15%, bevorzugt 10% der Zahl der optisch erfassten Objekte festgestellt wird. Ein Beleuchtungsfehler führt bei dieser bevorzugten Variante somit nicht zu einer sofortigen Veränderung des ersten Korrekturglieds, sondern es wird eine statistische Erfassung und Auswertung vorgenommen, um zu häufiges Auftreten von Beleuchtungsfehlern zu vermeiden.

Ein Steuerdatensatz für das erfindungsgemäße Verfahren schreibt für den Kraftfahrzeugscheinwerfer ein bestimmtes Verhalten bzw. bestimmte Sicherheitsabstände zu den vor Blendung zu schützenden Objekten für unterschiedliche Fahrsituationen vor. Fahrsituationen können hierbei nach Fahrgeschwindigkeit des Kraftfahrzeugs, Größe des erfassten Objekts, Position des erfassten Objekts und ähnlichem klassifiziert werden und entsprechende Verhaltensmuster für den Kraftfahrzeugscheinwerfer definiert werden. Bevorzugt wird hierbei dergestalt vorgegangen, dass der zumindest eine Steuerdatensatz unter Heranziehung von Testsituationen erstellt und dem Algorithmus zur Verfügung gestellt wird. Dies bedeutet, dass der Algorithmus beispielsweise beim Scheinwerferhersteller oder dem Kraftfahrzeughersteller, der das erfindungsgemäße Verfahren zur Anwendung bringt, in einer Testphase für den Scheinwerfer bzw. das Kraftfahrzeug durch Schulung des Algorithmus in realen oder fingierten Testsituationen festgelegt wird, wobei eine solche Schulung des Algorithmus an realen oder fingierten Testsituationen erfahrungsgemäß zu Steuerdatensätzen führt, die bereits sehr zufriedenstellende Ergebnisse hinsichtlich adaptiver Lichtfunktionen liefern können.

Um eine weitere Verbesserung des Verhaltens von Kraftfahrzeugscheinwerfern mit adaptiven Lichtfunktionen zu erreichen, ist das erfindungsgemäße Verfahren bevorzugt dahingehend weitergebildet, dass der Algorithmus ein zweites Korrekturglied umfasst und der zumindest eine Steuerdatensatz im zweiten Korrekturglied zum Rang einer Straße in Bezug gebracht wird. Während das erste Korrekturglied mit dem Kamerasystem und folglich mit der Außenwelt rückgekoppelt ist und zur Korrektur des Steuerdatensatzes in den Algorithmus eingreifen kann, dient das zweite Korrekturglied dazu, dem Scheinwerfer abhängig vom Rang einer Straße, d.h. abhängig davon, ob es sich um eine Autobahn, Bundesstraße, Landstraße oder um eine Straße im Ortsgebiet handelt, ein unterschiedliches Verhalten aufzutragen. Beispielsweise kann vorgesehen sein, auf einer Autobahn, bei der eher langsame oder zumindest kontinuierliche Veränderungen hinsichtlich der Position von vor Blendung zu schützenden Objekten zu erwarten sind, den Scheinwerfer dahingehend anzuweisen, näher an diese Objekte heran zu leuchten, wohingegen auf einer Landstraße, die eine Vielzahl von engen Kurven aufweisen kann, eine Blendung beispielsweise von Gegenverkehr aufgrund relativer schneller Positionsänderungen in horizontaler Richtung der Objekte mit größerer Wahrscheinlichkeit anzunehmen ist und der Scheinwerfer daher mit größeren Sicherheitsabständen betrieben werden sollte. Das zweite Korrekturglied arbeitet unabhängig vom ersten Korrekturglied und kann die Korrekturen, die durch eine Veränderung des ersten Korrekturglieds erfolgen, überlagern. Das zweite Korrekturglied kann entweder manuell oder beispielsweise durch die Auswertung von GPS-Daten verändert werden, so dass entweder der Fahrer eines Kraftfahrzeugs dem Algorithmus des erfindungsgemäßen Verfahrens mitteilen kann, auf welcher Straße sich das Fahrzeug befindet, oder aber eine automatische Voreinstellung aufgrund der GPS-Daten erfolgen kann.

In ähnlicher Weise kann es gemäß einer bevorzugten Ausführungsform des erfindungsgemäßen Verfahrens vorgesehen sein, dass der Algorithmus ein drittes Korrekturglied umfasst und der zumindest eine Steuerdatensatz im dritten Korrekturglied zu einem gewählten Betriebsmodus des Kraftfahrzeugs in Bezug gesetzt wird. Das dritte Korrekturglied ist wiederum vom ersten und zweiten Korrekturglied unabhängig und kann beispielsweise dazu dienen, Betriebsmodi eines Kraftfahrzeugs, wie beispielsweise einen Sportmodus oder einen Komfortmodus, auch im Verhalten des Scheinwerfers bei der Verwendung der adaptiven Lichtfunktion abzubilden. Beispielsweise könnte im Sportmodus wiederum näher an ein vor Blendung zu schützendes Objekt herangeleuchtet werden, um eine verbesserte Ausleuchtung der Fahrbahn zu gewährleisten, wohingegen im Komfortmodus von einer eher gemäßigten Fahrweise ausgegangen wird, so dass sich breitere Sicherheitsabstände aufgrund der gemächlichen Fahrweisen nicht störend auswirken.

Gemäß einer weiteren bevorzugten Ausführungsform der vorliegenden Erfindung kann das Verfahren dahingehend weitergebildet sein, dass der Algorithmus ein viertes Korrekturglied umfasst und der zumindest eine Steuerdatensatz im vierten Korrekturglied zur Kraftfahrzeuggeschwindigkeit in Bezug gesetzt wird. Auch das vierte Korrekturglied kann unabhängig von den anderen Korrekturgliedern operieren, wobei in aller Regel eine höhere Kraftfahrzeuggeschwindigkeit zu breiteren Sicherheitsabständen zur sicheren Vermeidung der Blendung von vor Blendung zu schützenden Objekten führt.

Das vierte Korrekturglied kann bevorzugt dahingehend wirken, dass der zumindest eine Steuerdatensatz im vierten Korrekturglied zu einem Einschlagwinkel eines Lenkrades des Kraftfahrzeugs in Bezug gesetzt wird, wobei ein großer Einschlagwinkel des Lenkrads des Kraftfahrzeugs mit einer rasch zu erwartenden Horizontalbewegung von vor Blendung auszunehmenden Objekten im Lichtbild des Kraftfahrzeugscheinwerfers in Verbindung gebracht werden und daher größere Sicherheitsabstände eingestellt werden können.

Bevorzugt wird der zumindest eine Steuerdatensatz im vierten Korrekturglied zu einer Gierrate des Lenkrades des Kraftfahrzeugs in Bezug gesetzt, wobei ähnlich einem hohen Einschlagwinkel eine hohe Gierrate des Lenkrads zu breiteren Sicherheitsmargen führen wird.

In letzter Konsequenz ist es in diesem Zusammenhang denkbar, den zumindest einen Steuerdatensatz im vierten Korrekturglied mit einer zu erwartenden Gierrate des Lenkrads des Kraftfahrzeugs in Bezug zu setzen, wie dies einer bevorzugten Ausführungsform der vorliegenden Erfindung entspricht. Ein zu erwartende Gierrate des Lenkrads kann beispielsweise aus GPS-Daten gewonnen werden, wenn davon ausgegangen wird, dass ein Fahrzeug dem Straßenverlauf einer Straße, auf der sich das Fahrzeug bewegt, zu folgen hat.

Wenn sich im Betrieb des Kraftfahrzeugscheinwerfers mit dem erfindungsgemäßen Verfahren herausstellt, dass der Steuerdatensatz häufig zu Beleuchtungsfehlern wie vorstehend definiert führt, kann es gemäß einer bevorzugten Ausführungsform der vorliegenden Erfindung auch vorgesehen sein, dass der zumindest eine Steuerdatensatz in Abhängigkeit von Werten des ersten Korrekturglieds veränderlich ist. So kann für den Fall, dass eine häufige Veränderung des ersten Korrekturglieds zur Vermeidung von Beleuchtungsfehlern notwendig ist, eine dauerhafte oder vorübergehende Veränderung des Steuerdatensatzes des Algorithmus erfolgen, so dass auch ohne die Wirkung des ersten Korrekturglieds bereits eine optimierte Ausleuchtung erzielt wird.

Eine bevorzugte Ausführungsform des vorliegenden erfindungsgemäßen Verfahrens zeichnet sich dadurch aus, dass die Intensität des Dimmens abhängig von der Wahrscheinlichkeit eines Beleuchtungsfehlers gewählt wird. Dies bedeutet, dass Veränderungen des ersten Korrekturglieds zur Vermeidung von mittels der optischen Erfassung festgestellten Beleuchtungsfehlern erfasst und hinsichtlich des Auftretens von Beleuchtungsfehlern in bestimmten, im Steuerdatensatz berücksichtigten Fahrsituationen statistisch ausgewertet werden können. In der Folge kann eine gewisse Intensität des Dimmens - von 0% Dimmung bis 100% Dimmung einer gewissen zu erwartenden Wahrscheinlichkeit des Auftreten eines Beleuchtungsfehlers zugeordnet bzw. eine solche Dimmungsintensität abhängig von der zu erwartenden Wahrscheinlichkeit des Auftreten eines Beleuchtungsfehlers eingestellt werden. In der Regel wird für diese bevorzugte Variante der Erfindung lediglich das Blenden bzw. das zumindest teilweises Beleuchten eines vor Blendung zu schützenden Objekts als Beleuchtungsfehler eingestuft.

Durch das Einstellen der Intensität des Dimmens abhängig von einer Wahrscheinlichkeit des Auftretens eines Beleuchtungsfehlers wird offenbar eine gewisse Fehlerrate als tolerierbar bzw. als vertretbar aufgefasst. Diese als vertretbar angesehene Beleuchtungsfehlerwahrscheinlichkeit kann gemäß einer bevorzugten Ausführungsform der vorliegenden Erfindung von der aktuellen Beschleunigung des Kraftfahrzeugs abhängig gemacht werden. Beispielsweise kann bei gleichförmiger Fahrt des Kraftfahrzeugs 10% Beleuchtungsfehlerwahrscheinlichkeit als vertretbar angenommen und eine vollständige Dimmung erst bei 10% Beleuchtungsfehlerwahrscheinlichkeit herbeigeführt werden, während bei einer Beschleunigung von bspw. 5 m/s² nur 5% Beleuchtungsfehlerwahrscheinlichkeit als vertretbar angenommen werden, sodass eine vollständige Dimmung bereits bei 5 % Beleuchtungsfehlerwahrscheinlichkeit erfolgt.

Ein erfindungsgemäßes Kraftfahrzeug zeichnet sich durch eine nach dem soeben dargelegten Verfahren gesteuerte, adaptive Lichtfunktion aus.

Die Erfindung wird nachfolgend anhand eines in der Zeichnung schematisch dargestellten Ausführungsbeispiels näher erläutert. In dieser zeigen:
Fig. 1 eine typische Situation eines entgegenkommenden Fahrzeugs, welches vor Blendung durch eine Fernlichtfunktion zu schützen ist,
Fig. 2 eine schematische Darstellung einer adaptiven Lichtfunktion, bei der ein Bereich um das entgegenkommende Fahrzeug ausgeblendet wurde, unter Verwendung eines Verfahrens nach dem Stand der Technik,
Fig. 3 die Entwicklung der Situation aus Fig. 2,
Fig. 4 eine nach dem erfindungsgemäßen Verfahren verbesserte Beleuchtungssituation,
Fig. 5 die Entwicklung der Beleuchtungssituation aus Fig. 4,
Fig. 6 ein Diagramm, zur Veranschaulichung der Intensität des Dimmens abhängig von einer vertretbaren Beleuchtungsfehlerwahrscheinlichkeit,
Fig. 7 ein Diagramm zur Veranschaulichung der Abnahme der vertretbaren Beleuchtungsfehlerwahrscheinlichkeit abhängig von der Beschleunigung des Fahrzeugs,
Fig. 8 ein Diagramm, zur Veranschaulichung der Intensität des Dimmens abhängig von einer vertretbaren Beleuchtungsfehlerwahrscheinlichkeit, die geringer ist als jene in Fig. 6, und
Fig. 9 ein Fließschema zur Veranschaulichung des erfindungsgemäßen Verfahrens.

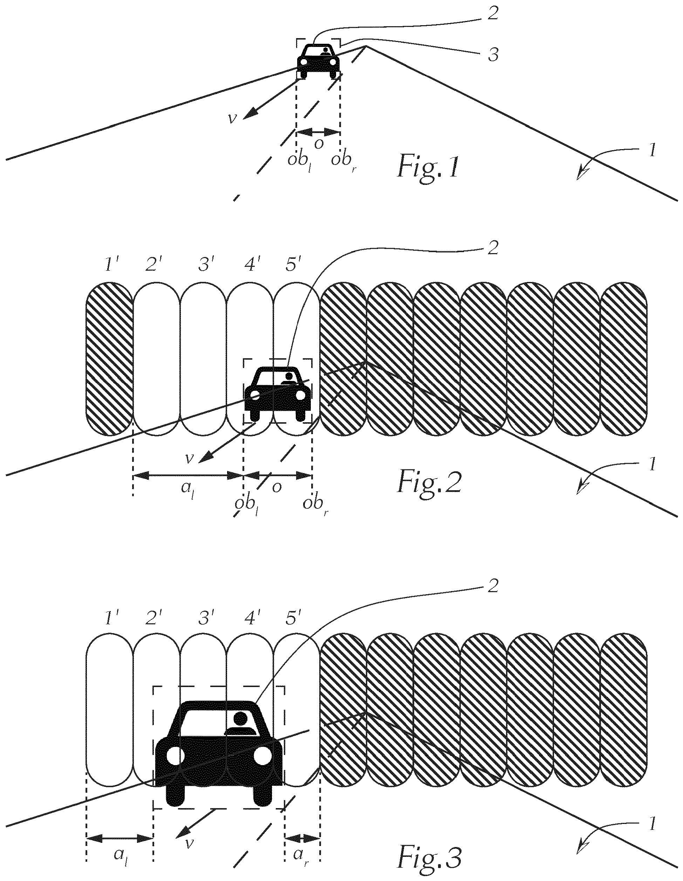

In Fig. 1 ist eine Fahrbahn mit 1 bezeichnet, auf der sich ein vor Blendung zu schützendes Objekt 2, in diesem Fall ein entgegenkommendes Fahrzeug, befindet, welches vor Blendung durch Fernlicht auszunehmen ist. Das Fahrzeug 2 kann, wie durch die Klammern 3 angedeutet, von einem Kamerasystem optisch erfasst werden, wobei die optische Erfassung eine relative Objektbreite o sowie Grenzen obₗ und obᵣ liefert. Gleichzeitig wird eine relative Geschwindigkeit, dargestellt durch den Vektor v, ermittelt.

Bei Verwendung von Verfahren nach dem Stand der Technik und insbesondere bei Verwendung in Kombination mit langsamen Kamerasystemen, d.h. einer langsamen optischen Erfassung, wird zur sicheren Vermeidung einer Blendung des Fahrzeugs 2 eine Reihe von Segmenten 2', 3', 4' und 5' durch Dimmen von den genannten Segmenten entsprechenden Leuchtelemente einer Leuchteinheit eines Kraftfahrzeugscheinwerfers abgedunkelt. Zur Vermeidung der Blendung des Objekts 2 wäre jedoch nur ein Abdunkeln der Segmente 4' und 5' notwendig, so dass das Abdunkeln der Segmente 2' und 3' einen Beleuchtungsfehler im Sinne eines zu breiten Abdunkelns darstellt, da sich in diesen Segmenten kein Objekt befindet, welches vor Blendung zu schützen ist. Die Breite des Sicherheitsabstandes links vom Objekt 2 ist in Fig. 2 mit aₗ bezeichnet.

Die Fig. 2 stellt somit einen Beleuchtungsfehler dar, da ein Leuchtelement gedimmt wurde, welches einem Segment der Gesamtlichtverteilung entspricht, in welchem sich kein vor Blendung zu schützendes Objekt befindet. Dieses Segment ist in diesem Fall das Segment 3', wobei ein weiteres Leuchtelement gedimmt wurde, welches dem Segment 2' entspricht, in welchem sich ebenfalls kein vor Blendung zu schützendes Objekt befindet. Erst beim Näherkommen des Fahrzeugs, wie dies in Fig. 3 dargestellt ist, befindet sich das Objekt 2 in den bisher abgeblendeten Segmenten 2', 3', 4' und 5', wobei nun zur Herstellung eines Sicherheitsabstands aₗ ein weiteres Segment 1' bzw. ein weiteres Leuchtelement abgedunkelt wurde, was ebenfalls eine unnötig breite Abdunkelung der Gesamtlichtverteilung mit sich bringt. In allen Figuren sind die nicht abgedunkelten Segmente der Gesamtlichtverteilung schraffiert dargestellt.

Der in Fig. 3 dargestellte, rechte Sicherheitsabstand aᵣ ist nicht als Beleuchtungsfehler einzustufen, da sich im Segment 5' das vor Blendung zu schützende Objekt 2 befindet.

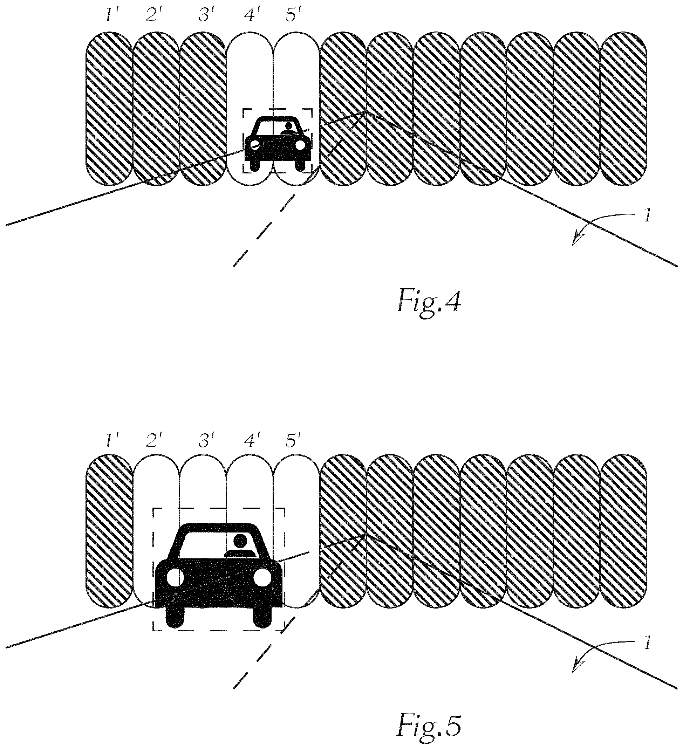

Die Fig. 4 zeigt nun eine nach dem erfindungsgemäßen Verfahren gesteuerte, adaptive Fernlichtfunktion, bei welcher lediglich jene Segmente 4' und 5' abgedunkelt wurden, in denen sich auch tatsächlich das Objekt 2 befindet, was auf die erfindungsgemäße Korrektur des Algorithmus zurückzuführen ist.

In Fig. 5 ist zu erkennen, dass bei Annäherung des Objekts 2 zwei weitere Leuchtelemente bzw. Segmente 2' und 3' abgedunkelt werden, das Segment 1' wird jedoch aufgrund des erfindungsgemäß selbstkorrigierenden Algorithmus nicht abgedunkelt.

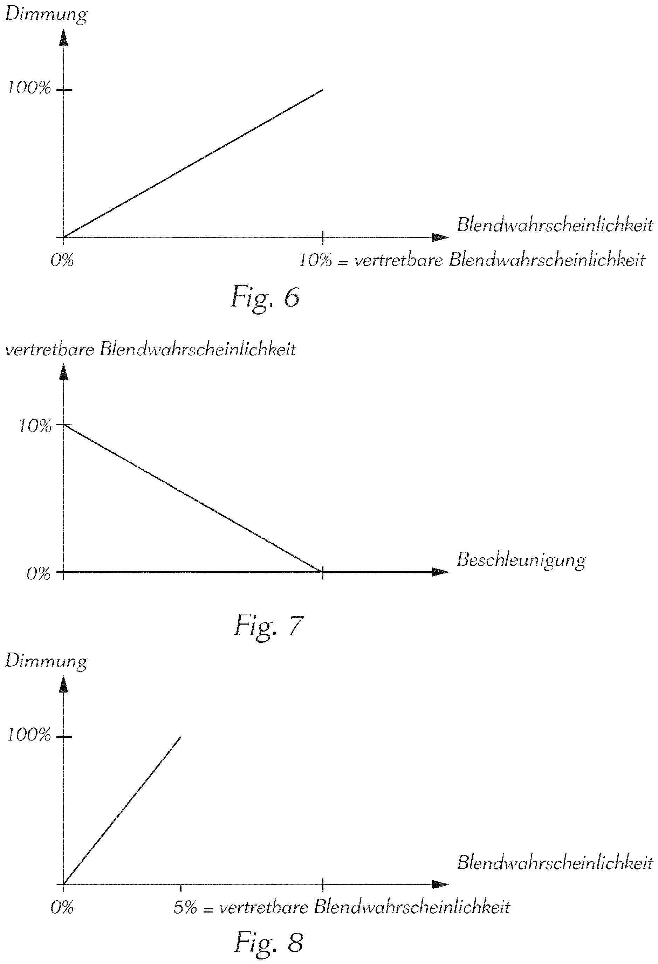

In Fig. 6 ist dargestellt, dass gemäß der oben beschriebenen bevorzugten Variante der vorliegenden Erfindung die Intensität des Dimmens von der Blendwahrscheinlichkeit abhängig gemacht werden kann, die über die optische Erfassung der Objektkanten zur jeweiligen Fahrsituation ermittelt werden kann. Das Verfahren kann demgemäß dergestalt durchgeführt werden dass bei einer sehr geringen Blendwahrscheinlichkeit (bspw. 0% Blendwahrscheinlichkeit) ein fragliches Leuchtelement des Kraftfahrzeugscheinwerfers nicht gedimmt wird, wobei die Intensität des Dimmens mit steigender Blendwahrscheinlichkeit ansteigt. Im in Fig. 6 gezeigten Beispiel wurde eine Blendwahrscheinlichkeit von mehr als 10% als nicht mehr vertretbar definiert, sodass für Leuchtelemente, die Segmenten der Gesamtlichtverteilung entsprechen, in denen eine Blendwahrscheinlichkeit von mehr als 10% gegeben ist, ein vollständiges Dimmen (100% Dimmung), d.h. ein Abschalten des zumindest einen dem genannten Segment (1', 2', 3', 4', 5') entsprechenden Leuchtelements erfolgt.

Fig. 7 zeigt, dass die als vertretbar angesehene Blendwahrscheinlichkeit mit zunehmender Beschleunigung des Fahrzeugs abnehmen kann, was dazu führt, dass eine vollständige Dimmung (100% Dimmung) bspw. bereits bei 5% Blendwahrscheinlichkeit erfolgt, wie dies der Fig. 8 entnommen werden kann.

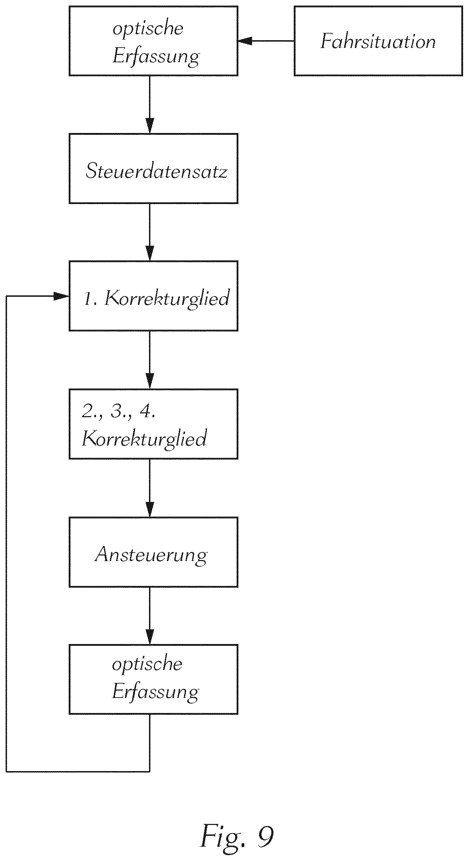

Anhand der Darstellung in Fig. 9 lässt sich das erfindungsgemäße Verfahren anschaulich erläutern. Eine Fahrsituation wird durch ein Kamerasystem optisch erfasst, wobei insbesondere eine optische Erfassung von Umrisskanten eines vor Blendung zu schützenden Objekts erfolgt. Die Analysedaten der optischen Erfassung werden einem Algorithmus zugeführt, der nach Maßgabe eines Steuerdatensatzes das Dimmen eines Leuchtelements einer die adaptive Lichtfunktion bereitstellenden und eine Mehrzahl von Leuchtelementen aufweisenden Leuchteinheit eines Kraftfahrzeugscheinwerfers bedingt, welches einem Segments der Gesamtlichtverteilung entspricht, indem sich ein vor Blendung zu schützendes Objekt, in der Regel ein Fahrzeug oder ein Fußgänger, befindet. Die mit Hilfe des Steuerdatensatzes erzeugten Steuersignale durchlaufen ein erstes Korrekturglied, welches a priori neutral bleibt, um die Steuersignale nicht zu beeinflussen. Mit den Steuersignalen wird die adaptive Fernlichtfunktion angesteuert und in der Folge eine optische Erfassung von eventuellen Beleuchtungsfehlern durchgeführt. Wenn festgestellt wird, dass ein Beleuchtungsfehler auftritt, oder Beleuchtungsfehler zu häufig auftreten, führt eine Rückkoppelung der optischen Erfassung mit dem Korrekturglied zu einer Änderung im Korrekturglied, sodass die Steuersignale, die vom Steuerdatensatz ausgegeben werden, durch die Wirkung des ersten Korrekturglieds dahingehend verändert werden, um den Beleuchtungsfehler in der jeweiligen Fahrsituation zu vermeiden. Weitere Korrekturglieder können, wie bereits beschrieben vorgesehen sein, um Anpassungen an den Rang einer Straße, den Betriebsmodus des Kraftfahrzeugs oder an das Fahrverhalten des Fahrers vorzunehmen. Die genannten zweiten, dritten und vierten Korrekturglieder verhalten sich ebenso wie das erste Korrekturglied a priori neutral und Entfalten ihre Wirkung auf die vom Steuerdatensatz ausgegebenen Steuersignale erst nach Aktivierung dieser Korrekturglieder in den weiter oben beschriebenen Fällen.

## Patentansprüche

1. Verfahren zur Steuerung einer adaptiven Lichtfunktion eines mit einem Kraftfahrzeug zusammenwirkenden Kraftfahrzeugscheinwerfers, bei welchem ausgehend von einer Gesamtlichtverteilung der adaptiven Lichtfunktion ein Segment (1', 2', 3', 4', 5') der Gesamtlichtverteilung, in welchem sich ein vor Blendung zu schützendes Objekt (2) befindet, durch Dimmen zumindest eines dem genannten Segment (1', 2', 3', 4', 5') entsprechenden Leuchtelements einer die adaptive Lichtfunktion bereitstellenden und eine Mehrzahl von Leuchtelementen aufweisenden Leuchteinheit des Kraftfahrzeugscheinwerfers abgedunkelt wird, wobei das Dimmen in Abstimmung mit Analysedaten einer optischen Erfassung von Umrisskanten des Objekts erfolgt, wobei das Dimmen nach Maßgabe zumindest eines Steuerdatensatzes eines selbstkorrigierenden Algorithmus erfolgt, wobei der Algorithmus zumindest ein erstes Korrekturglied umfasst, welches mit den Analysedaten der optischen Erfassung rückgekoppelt ist und eine Veränderung des ersten Korrekturglieds vorgenommen wird, wenn ein Beleuchtungsfehler festgestellt wird,
**dadurch gekennzeichnet, dass** eine Veränderung des ersten Korrekturglieds dann vorgenommen wird, wenn aufgrund der optischen Erfassung von Umrisskanten von Objekten (2) in einem bestimmten Erfassungszeitraum ein Beleuchtungsfehler bezüglich zumindest 5% bis 15%, bevorzugt 10% der Zahl der optisch erfassten Objekte (2) festgestellt wird.

2. Verfahren nach Anspruch 1, **dadurch gekennzeichnet, dass** als Beleuchtungsfehler ein Dimmen eines Leuchtelements eingestuft wird, welches einem Segment (1', 2', 3', 4', 5') der Gesamtlichtverteilung entspricht, in welchem sich kein vor Blendung zu schützendes Objekt (2) befindet.

3. Verfahren nach Anspruch 1 oder 2, **dadurch gekennzeichnet, dass** als Beleuchtungsfehler ein zumindest teilweises Beleuchten eines vor Blendung zu schützenden Objekts (2) eingestuft wird.

4. Verfahren nach einem der Ansprüche 1 bis 3, **dadurch gekennzeichnet, dass** das Dimmen als Abschalten des zumindest einen dem genannten Segment (1', 2', 3', 4', 5') entsprechenden Leuchtelements erfolgt.

5. Verfahren nach einem der Ansprüche 1 bis 4, **dadurch gekennzeichnet, dass** der zumindest eine Steuerdatensatz unter Heranziehung von Testsituationen erstellt und dem Algorithmus zur Verfügung gestellt wird.

6. Verfahren nach einem der Ansprüche 1 bis 5, **dadurch gekennzeichnet, dass** der Algorithmus ein zweites Korrekturglied umfasst, welches zur Korrektur des zumindest einen Steuerdatensatzes in Bezug auf den Rang einer Straße (1) dient und zu einer Veränderung von Steuersignalen für den Kraftfahrzeugscheinwerfer veranlasst.

7. Verfahren nach einem der Ansprüche 1 bis 6, **dadurch gekennzeichnet, dass** der Algorithmus ein drittes Korrekturglied umfasst, welches zur Korrektur des zumindest einen Steuerdatensatzes in Bezug auf einen gewählten Betriebsmodus des Kraftfahrzeugs dient und zu einer Veränderung von Steuersignalen für den Kraftfahrzeugscheinwerfer veranlasst.

8. Verfahren nach einem der Ansprüche 1 bis 7, **dadurch gekennzeichnet, dass** der Algorithmus ein viertes Korrekturglied umfasst, welches zur Korrektur des zumindest einen Steuerdatensatzes in Bezug auf eine Kraftfahrzeuggeschwindigkeit und/oder auf einen Einschlagwinkel eines Lenkrades des Kraftfahrzeugs und/oder auf eine Gierrate des Lenkrades des Kraftfahrzeugs und/oder auf eine zu erwartenden Gierrate des Lenkrades des Kraftfahrzeugs dient und zu einer Veränderung von Steuersignalen für den Kraftfahrzeugscheinwerfer veranlasst.

9. Verfahren nach einem der Ansprüche 1 bis 8, **dadurch gekennzeichnet, dass** der zumindest eine Steuerdatensatz in Abhängigkeit von Werten des ersten Korrekturglieds veränderlich ist.

10. Verfahren nach einem der Ansprüche 1 bis 9, **dadurch gekennzeichnet, dass** die Intensität des Dimmens abhängig von der Wahrscheinlichkeit eines Beleuchtungsfehlers in einer bestimmten Fahrsituation gewählt wird.

11. Kraftfahrzeug umfassend einen Kraftfahrzeugscheinwerfer mit einer nach einem Verfahren gemäß einem der Ansprüche 1 bis 10 gesteuerten adaptiven Lichtfunktion.

## Claims

1. Method for controlling an adaptive light function of a motor vehicle headlamp cooperating with a motor vehicle, wherein, starting from a total light distribution of the adaptive light function, a segment (1', 2', 3', 4', 5') of the overall light distribution in which an object (2) to be protected from glare is located is controlled is darkened by dimming at least one light element corresponding to said segment (1', 2', 3', 4', 5') of a light unit of the motor vehicle headlamp which provides the adaptive light function and has a plurality of light elements, wherein the dimming is carried out in coordination with analysis data of an optical detection of contour edges of the object, the dimming being carried out in accordance with at least one control data set of a self-correcting algorithm, wherein the algorithm comprises at least a first correction element which is fed back to the analysis data of the optical detection and a modification of the first correction element is made when an illumination error is detected,
**characterized in that** a modification of the first correction element is made when based on the optical detection of contour edges of objects (2) in a determined detection period, an illumination error is detected with respect to at least 5% to 15%, preferably 10%, of the number of optically detected objects (2).

2. Method according to claim 1, **characterized in that** as an illumination error, a dimming of a light element is classified which the dimming corresponds to a segment (1', 2', 3', 4', 5') of the overall light distribution in which no object (2) to be protected from glare is located.

3. Method according to claim 1 or 2, **characterized in that** an at least partial illumination of an object (2) to be protected from glare is classified as an illumination error.

4. Method according to any one of claims 1 to 3, **characterized in that** the dimming is done by switching off of the at least one light element corresponding to said segment (1', 2', 3', 4', 5').

5. Method according to any one of claims 1 to 4, **characterized in that** the at least one control data set is created using test situations and is made available to the algorithm.

6. Method according to any one of claims 1 to 5, **characterized in that** the algorithm comprises a second correction element which is used to correct the at least one control data set with respect to the rank of a road (1) and causes modification of control signals for the motor vehicle headlight.

7. Method according to any one of claims 1 to 6, **characterized in that** the algorithm comprises a third correction element which is used to correct the at least one control data set with respect to a selected operating mode of the motor vehicle and causes modification of control signals for the motor vehicle headlamp.

8. Method according to any one of claims 1 to 7, **characterized in that** the algorithm comprises a fourth correction element which is used to correct the at least one control data record with respect to a motor vehicle speed and/or a steering angle of a steering wheel of the motor vehicle and/or a yaw rate of the steering wheel of the motor vehicle and/or a yaw rate to be expected of the steering wheel of the motor vehicle, and causes modifications of control signals for the motor vehicle headlamp.

9. Method according to any one of claims 1 to 8, **characterized in that** the at least one control data set is variable as a function of values of the first correction element.

10. Method according to any one of claims 1 to 9, **characterized in that** the intensity of the dimming is chosen as a function of the probability of a lighting error in a particular driving situation.

11. Motor vehicle comprising a motor vehicle headlamp having an adaptive lighting function controlled according to a method of any one of claims 1 to 10.

## Revendications

1. Procédé de commande d'une fonction d'éclairage adaptative d'un projecteur de véhicule automobile coopérant avec un véhicule automobile, dans lequel, à partir d'une distribution lumineuse totale de la fonction d'éclairage adaptative, un segment (1', 2', 3', 4', 5') de la distribution lumineuse totale dans lequel se trouve un objet (2) à protéger de l'éblouissement est atténuée par assombrissant au moins un élément lumineux correspondant audit segment (1', 2', 3', 4', 5') d'une unité d'éclairage du projecteur de véhicule automobile fournissant la fonction d'éclairage adaptatif et comportant une pluralité d'élément lumineux, l'assombrissement étant effectuée en coordination avec des données d'analyse d'une détection optique de bords de contour de l'objet, l'assombrissement étant effectuée conformément à au moins un ensemble de données de contrôle d'un algorithme d'autocorrection, l'algorithme comportant au moins un premier élément de correction qui est réinjecté dans les données d'analyse de la détection optique, et une modification étant apportée au premier élément de correction lorsqu'une erreur d'éclairage est détectée,
**caractérisé en ce qu'**une modification est apportée au premier élément de correction lorsque, sur la base de la détection optique de bords de contour d'objets (2) dans une période de détection spécifique, une erreur d'éclairage est détectée pour au moins 5 % à 15 %, de préférence 10 %, du nombre d'objets détectés optiquement (2).

2. Procédé selon la revendication 1, **caractérisé en ce que** comme une erreur d'éclairage une variation d'un élément lumineux est classée qui correspond à un segment (1', 2', 3', 4', 5') de la distribution lumineuse globale dans lequel ne se trouve aucun objet (2) à protéger contre l'éblouissement.

3. Procédé selon la revendication 1 ou 2, **caractérisé en ce qu'**une illumination au moins partielle d'un objet (2) à protéger de l'éblouissement est classée comme une erreur d'illumination.

4. Procédé selon l'une quelconque des revendications 1 à 3, **caractérisé en ce que** l'assombrissement est réalisée en éteignant ledit au moins un élément lumineux correspondant audit segment (1', 2', 3', 4', 5').

5. Procédé selon l'une quelconque des revendications 1 à 4, **caractérisé en ce que** ledit au moins un ensemble de données de contrôle est créé en utilisant des situations de test et est mis à la disposition de l'algorithme.

6. Procédé selon l'une quelconque des revendications 1 à 5, **caractérisé en ce que** l'algorithme comprend un deuxième élément de correction qui sert à corriger ledit au moins un ensemble de données de contrôle par rapport au rang d'une route (1) et provoque une modification des signaux de commande pour le phare du véhicule automobile.

7. Procédé selon l'une quelconque des revendications 1 à 6, **caractérisé en ce que** l'algorithme comprend un troisième élément de correction qui sert à corriger ledit au moins un ensemble de données de contrôle par rapport à un mode de fonctionnement sélectionné du véhicule automobile et provoque une modification des signaux de commande pour le phare du véhicule automobile.

8. Procédé selon l'une quelconque des revendications 1 à 7, **caractérisé en ce que** l'algorithme comprend un quatrième élément de correction qui sert à corriger ledit au moins un ensemble de données de contrôle par rapport à une vitesse du véhicule automobile et/ou à un angle de braquage d'un volant du véhicule automobile et/ou à une vitesse de lacet du volant du véhicule automobile et/ou à une vitesse de lacet attendue du volant du véhicule automobile et provoque une modification des signaux de commande pour le phare du véhicule automobile.

9. Procédé selon l'une quelconque des revendications 1 à 8, **caractérisé en ce que** ledit au moins un ensemble de données de contrôle est variable en fonction des valeurs du premier élément de correction.

10. Procédé selon l'une quelconque des revendications 1 à 9, **caractérisé en ce que** l'intensité de l'assombrissement est choisie en fonction de la probabilité d'une erreur d'éclairage dans une situation de conduite particulière.

11. Véhicule à moteur comprenant un phare de véhicule à moteur comportant un projecteur de véhicule automobile comprenant une fonction d'éclairage adaptatif commandée selon un procédé selon l'une quelconque des revendications 1 à 10.
